**Europäisches Patentamt**

**European Patent Office**

**Office européen des brevets**

(11) Veröffentlichungsnummer: **0 115 815**
**A1**

## (12) EUROPÄISCHE PATENTANMELDUNG

(21) Anmeldenummer: **84100720.6**

(51) Int. Cl.³: **H 04 B 3/56**

(22) Anmeldetag: **24.01.84**

(30) Priorität: **08.02.83 DE 3304260**

(43) Veröffentlichungstag der Anmeldung: **15.08.84**
**Patentblatt 84/33**

(84) Benannte Vertragsstaaten: **AT CH DE FR GB IT LI SE**

(71) Anmelder: **SIEMENS AKTIENGESELLSCHAFT, Berlin und München Wittelsbacherplatz 2, D-8000 München 2 (DE)**

(72) Erfinder: **Stürzl, Wilhelm, Wiesenstrasse 12, D-8501 Winkelhald (DE)**
Erfinder: **Seibert, Rudolf, Dipl.-Ing., Pilotystrasse 73, D-8500 Nürnberg (DE)**
Erfinder: **Schwendtner, Manfred, Dipl.-Ing., St. Gundekarstrasse 3, D-8501 Schwarzenbruck (DE)**
Erfinder: **Scharm, Walther, Dipl.-Ing., Elsässer Strasse 4, D-8500 Nürnberg (DE)**

(54) Schaltungsanordnung zur Übertragung von Tonfrequenzsignalen über einen Netztransformator.

(57) Bei der erfindungsgemässen Anordnung sollen Tonfrequenzsignale über einen Netztransformator (6), der zwei n-phasige Stromnetze (A–B, C) miteinander koppelt, übertragen werden. Dabei werden die Tonfrequenzsignale in einem Stromnetz (B) zwischen einem Phasenleiter (3c) und einem Nulleiter eingekoppelt. Dasselbe Stromnetz enthält zwischen den einzelnen Phasen angeordnete Kompensationskondensatoren (4). Um trotz dieser Kompensationskondensatoren (4) eine Übertragung der Tonfrequenzsignale über den Netztransformator (6) zu ermöglichen, sind dem Netztransformator (6) in (n–1) Phasen Sperrkreise (5) für die Tonfrequenz vorgeschaltet.

SIEMENS AKTIENGESELLSCHAFT    Unser Zeichen
Berlin und München           VPA **83 P 3038 E**

Schaltungsanordnung zur Übertragung von Tonfrequenzsignalen über einen Netztransformator

Die Erfindung betrifft eine Schaltungsanordnung zur
Übertragung von Tonfrequenzsignalen über einen Netztransformator in Stern-Dreieckschaltung, der zwei
n-phasige Stromnetze miteinander koppelt, von denen ein
Stromnetz zwischen die Phasenleiter geschaltete Kompensationskondensatoren aufweist, wobei die Tonfrequenzsignale in diesem Stromnetz zwischen einem Phasenleiter
und einem Nulleiter eingekoppelt sind.

Zur Informationsübertragung im Stromnetz werden häufig
Tonfrequenzsignale, d.h. Signale in einem Frequenzbereich zwischen 150 Hz und 10 kHz auf Leitungen der
Nieder-, Mittel- oder Hochspannungsebene eingekoppelt
und irgendwo im Netz auf einer beliebigen Spannungsebene wieder ausgekoppelt. In der Niederspannungsebene
erfolgt die Einkopplung des Tonfrequenzsignals meist
in eine Phase gegen Erde. Niederspannungsnetze enthalten
im allgemeinen verbrauchereigene Kompensationskondensatoren, wobei große Kompensationskondensatoren im allgemeinen Drehstromverbrauchern zugeordnet sind und zwischen
den Phasen liegen. Über diese Kompensations-Kondensatoren wird das Tonfrequenzsignal gleichphasig auf alle
Phasenleiter übertragen. Da somit das Tonfrequenzsignal
gleichphasig in allen Phasenleitern ansteht, ist es ohne
weiteres nicht möglich, dieses über einen das Niederspannungsnetz mit einem Mittelspannungsnetz koppelnden
Netztransformator auf die in Dreieck geschaltete Mittelspannungswicklung zu übertragen. Eine Abhilfe könnte
dadurch geschaffen werden, daß man den Kompensationskondensatoren Drosseln oder auf die Tonfrequenz abgestimmte Sperrkreise vorschaltet. Damit könnte man eine

Sid 2 Ste - 02.02.1983

Übertragung des Tronfrequenzsignals auf alle Leiter verhindern, und somit eine Signalübertragung über den Netztransformator sicherstellen. Eine derartige Maßnahme wäre zwar in Mittel- und Hochspannungsnetzen, wo die Standorte von Kompensationskondensatoren dem EVU bekannt sind, im Prinzip möglich. In Niederspannungsnetzen dagegen sind die verbrauchereigenen Kompensationskondensatoren den EVUs nicht bekannt, so daß die geschilderte Verdrosselung auf größte Schwierigkeiten stoßen würde. Darüber hinaus wäre sie sehr aufwendig, da sie für sämtliche Kompensationskondensatoren vorgesehen werden müßte und - insbesondere, wenn sie auf Tonfrequenzsignale niedriger Frequenz ausgelegt werden müßte - die Wirkung des Kompensationskondensators beeinträchtigen würde.

Aufgabe der Erfindung ist es daher, eine Übertragung von Tonfrequenzsignalen über Netztransformatoren auch ohne Vorschaltung von Drosseln für die Kompensationskondensatoren zu ermöglichen.

Die Aufgabe wird erfindungsgemäß dadurch gelöst, daß in dem mit Kompensationskondensatoren versehenen Stromnetz dem Netztransformator in (n - 1) Phasen Sperrkreise für die Tonfrequenz vorgeschaltet sind. Dadurch wird in diesen Phasen das Tonfrequenzsignal gesperrt, so daß dieses asymmetrisch zum Netztransformator gelangt, so daß eine Übertragung über den Netztransformator stattfindet.

Jeder Sperrkreis kann einen Strommeßwandler und einen Stromwandler enthalten, wobei die Primärwicklung des Strommeßwandlers und die Sekundärwicklung des Stromwandlers in Reihenschaltung in den zugeordneten Phasenleiter eingefügt sind und die Sekundärwicklung des Strommeßwandlers über ein auf die Tonfrequenz abgestimmtes, für dieses durchlässiges Filter und einen Leistungsverstärker mit der Primärwicklung des Stromwandlers verbunden ist. Damit erhält man eine Regelschleife, bei
der die Amplitude des Tronfrequenzsignals in den entsprechenden Phasen auf sehr geringe Werte reduziert wird.
Eine derartige, über Stromwandler bzw. Strommeßwandler
in die jeweilige Phase eingekoppelte Schaltung ist
einfacher zu realisieren als ein herkömmlicher, direkt
in die Phase eingeschalteter Sperrkreis mit Drossel und
Kondensator.

Zweckmäßigerweise ist der Sekundärwicklung des Strommeßwandlers ein auf die Tonfrequenz abgestimmter
Parallelschwingkreis parallel geschaltet und der Primärwicklung des Stromwandlers ebenfalls ein auf die Tonfrequenz abgestimmter Parallelschwingkreis parallel geschaltet. Damit ist der Strommeßwandler bzw. der Stromwandler mit einer für die Netzfrequenz niederohmigen
Bürde abgeschlossen, so daß eine Sättigung dieser Wandler vermieden wird. Gleichzeitig wird aber durch die
Parallelschwingkreise für die Tonfrequenzsignale nur
eine niederige Dämpfung verursacht.

Vorteilhafterweise ist zwischen dem Leistungsverstärker
und der Primärwicklung des Stromwandlers ein Übertrager
angeordnet. Dieser setzt die niedrige Ausgangsspannung
des Leistungsverstärkers hoch, was die Auslegung des
Parallelschwingkreises wegen der kleineren Blindströme erleichtert.

Das Filter kann ein aktives Filter sein, das insbesondere
bei Tonfrequenzsignalen mit niedriger Frequenz mit geringerem Aufwand realisiert werden kann als ein aus
Drossel und Kondensator aufgebautes passives Filter.

Wenn man den Strommeßwandler und den Stromwandler als
Durchsteckwandler ausbildet, so entfällt eine gesonderte
Primär- bzw. Sekundärwicklung und die Montage wird erleichtert.

Wenn über den Netztransformator im Sinne einer Zweiwegekommunikation Tonfrequenzsignale in beiden Richtungen übertragen werden sollen, so werden in dem mit
Sperrkreisen versehenen Stromnetz zweckmäßigerweise
zwischen Verbrauchern und den Sperrkreisen die einzelnen Phasen mit Koppelkondensatoren überbrückt. Durch
die Sperrkreise wird verhindert, daß das über den Netztransformator übertragene Signal, das in den einzelnen
Phasenleitern gegenphasig ist, über evtl. vorhandene
Kompensationskapazitäten kurzgeschlossen wird. Mit den
Sperrkreisen wird also erreicht, daß sich ein Signalpegel gegen Erde ausbildet, allerdings zunächst nur in
einer Phase. Durch die zusätzlich installierten Koppelkondensatoren wird das Signal auch dann, wenn keine
Kompensationskondensatoren vorhanden sein sollten, nach
den Sperrkreisen wieder gleichphasig auf alle Phasenleiter übertragen und ist damit aus jedem Phasenleiter
auskoppelbar. Die Sperrkreise sind also in beiden Signalrichtungen zur Sicherstellung der Signalübertagung
trotz vorhandener Kompensationskapazitäten wirksam.

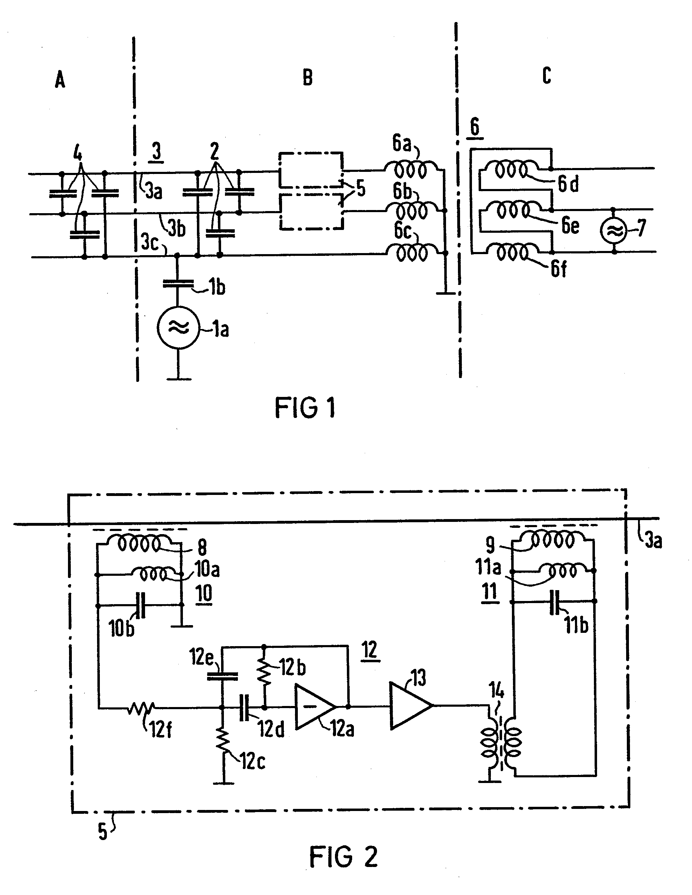

Die Erfindung wird nachfolgend anhand eines Ausführungsbeispiels nach den Figuren 1 und 2 näher erläutert.

Figur 1 zeigt ein Drehstromnetz, dessen Niederspannungsebene mit A, B und dessen Mittelspannungsebene mit C
bezeichnet sind. Nieder- und Mittelspannungsebene sind
mit einem Netztransformator 6 gekoppelt. Die Niederspannungsseite des Netztransformators 6 weist einen geerdeten Sternpunkt auf, während die Hochspannungsseite
in sternpunktfreier Dreieckschaltung geschaltet ist.

Im Verbraucherbereich A der Niederspannungsebene sind
zwischen den einzelnen Phasen verbrauchereigene Kompensationskondensatoren 4 angeordnet, deren Lage und Größe
vom EVU praktisch nicht beeinflußbar sind.

0115815

In einen Phasenleiter 3c des Niederspannungsnetzes wird durch einen Signalgenerator 1a über einen Kondensator 1b ein Tonfrequenzsignal zur Informationsübermittlung eingespeist. Dieses Tonfrequenzsignal soll über den Netztransformator 6 in die Mittelspannungsebene C übertragen werden. Ohne weitere Maßnahmen ist dies jedoch nicht möglich, da das Tonfrequenzsignal über die zwischen die Phasenleiter 3a bis 3c geschalteten Kompensationskondensatoren 4 gleichphasig in alle Phasenleiter 3a und 3b eingekoppelt wird. Das an den Niederspannungswicklungen 6a bis 6c des Netztransformators 6 anstehende gleichphasige Signal wird jedoch über den mittelspannungsseitig im Dreieck geschalteten Netztransformator 6 nicht übertragen.

Bei der Anordnung nach Figur 1 ist auch auf der Mittelspannungsseite C ein Sender 7 für Tonfrequenzsignale vorgesehen, der zwischen zwei Phasenleitern angeordnet ist. Die vom Sender 7 ausgesendeten Tonfrequenzsignale werden zwar über den Netztransformator 6 auf die Niederspannungsseite B übertragen und stehen gegenphasig an den Wicklungen 6a bis 6c an. Durch die Kompensationskondensatoren 4 werden jedoch die transformierten Tonfrequenzsignale kurzgeschlossen, so daß sich kein Signalpegel gegen Erde ausbilden kann.

Um die Probleme der Tonfrequenzsignalübertragung sowohl von der Niederspannungsseite zur Mittelspannungsseite als auch von der Mittelspannungsseite zur Niederspannungsseite zu beseitigen, werden erfindungsgemäß in einem dem EVU zugeordneten Niederspannungsbereich B dem Netztransformator 6 in zwei Phasen Sperrkreise 5 vorgeschaltet. Die Sperrkreise 5 sind in die Phasenleiter 3a und 3b eingefügt, in die der Tonfrequenzsignalgenerator 1a nicht direkt einspeist. Sie sind auf die Tonfrequenz abgestimmt, d.h. für die Tonfrequenzsignale undurchlässig. Damit steht an den Wicklungen 6a bis 6c ein unsymmetrisches Tonfrequenzsignal an, das über den Netztransformator 6 auf die Mittelspannungsseite C übertragen wird.

Bei der Übertragung von Tonfrequenzsignalen von der Mittelspannungsseite C zur Niederspannungsseite B verhindern die in beiden Signalrichtungen wirksamen Sperrkreise 5 einen Kurzschluß des übertragenen Tonfrequenzsignals durch die Kompensationskondensatoren 4. Im Phasenleiter 3c kann sich also eine Tonfrequenzsignalspannung gegen Erde ausbilden. Dieses direkt nur auf den Phasenleiter 3c übertragene Tonfrequenzsignal wird über die Kompensationskondensatoren 4 auch auf die beiden anderen Phasenleiter 3a und 3b übertragen. Da eine Signalübertragung auf alle drei Phasenleiter auch sichergestellt sein muß, wenn im Niederspannungsnetz keine Kompensationskondensatoren vorhanden sind, sind im EVU-Bereich B des Niederspannungsnetzes Koppelkondensatoren 2 vorgesehen, über die das Tonfrequenzsignal auf alle Phasenleiter eingekoppelt wird.

Die Sperrkreise 5 ermöglichen also eine Tonfrequenzsignalübertragung über den Netztransformator 6 sowohl vom Niederspannungsnetz A, B zum Mittelspannungsnetz C als auch umgekehrt, wobei den Kompensationskondensatoren 4 keine Drossel vorgeschaltet werden muß. Die Sperrkreise 5 wirken in beiden Signalrichtungen.

Die Sperrkreise 5 könnten grundsätzlich als herkömmliche Schwingkreise mit in den jeweiligen Phasenleiter eingeschalteter Drossel und Kondensator realisiert werden. Da derartige Schwingkreise jedoch für hohe Ströme ausgelegt sein müßten, wäre eine solche Realisierung recht aufwendig. Figur 2 zeigt einen Sperrkreis 5, der mit geringerem Aufwand aufgebaut werden kann.

Im Sperrkreis 5 nach Figur 2 ist der zugeordnete Phasenleiter, im Beispiel der Phasenleiter 3a, mit zwei hintereinander geschalteten Durchsteckwandlern 8 bzw. 9
versehen. Dabei dient der Durchsteckwandler 8 als Strommeßwandler. Der Strommeßwandler 8 ist sekundärseitig
mit einem aus einem Kondensator 10b und einer Drossel 10a
bestehenden Parallelschwingkreis 10 versehen. Dieser
Parallelschwingkreis 10 ist auf die Tonfrequenz abgestimmt, so daß der Strommeßwandler 8 für die Netzfrequenz
eine niederohmige, für die Signalfrequenz aber eine hochohmige Bürde aufweist. Damit wird eine Sättigung des
Strommeßwandlers 8 verhindert. Mit dem Strommeßwandler 8
wird das auf dem Phasenleiter 3a vorhandene Tonfrequenzsignal abgegriffen und einem aktiven Filter 12 zugeführt.
Dieses enthält einen Operationsverstärker 12a, dessen
invertierendem Eingang das mit dem Strommeßwandler 8 abgegriffene Signal über einen Widerstand 12f und einen
Kondensator 12d zugeführt wird. Der Operationsverstärker
12a ist zweifach gegengekoppelt und zwar einmal über
einen Kondensator 12e, der zwischen dem Ausgang des
Operationsverstärkers 12a und dem Verbindnngspunkt von
Widerstand 12f und Kondensator 12d angeordnet ist und
zum anderen über einen Widerstand 12b, der zwischen
Ausgang des Operationsverstärkers 12a und dessen invertierendem Eingang angeordnet ist. Ferner ist der Verbindungspunkt von Widerstand 12f und Kondensator 12d
über einen Widerstand 12c an Massepotential gelegt.
Die Wirkungsweise eines derartigen aktiven Filters ist
in dem Buch Tietze-Schenk, Halbleiterschaltungstechnik,
2. Auflage 1971, Seiten 275 bis 276 erläutert.
Das Filter 12 ist auf die Tonfrequenz abgestimmt, d.h.
im wesentlichen nur für die Tonfrequenzsignale durchlässig. Die so aus der mit dem Strommeßwandler 8 gewonnenen Spannung herausgefilterten Tonfrequenzsignale
werden über einen Leistungsverstärker 13 der Primärwicklung eines Übertragers 14 zugeführt. Die Sekundärwicklung des Übertragers 14 ist mit der Primärwicklung des Stromwandlers 9 verbunden. Dabei ist die Polarität des über den Stromwandler 9 in den Phasenleiter 3a eingekoppelten Signals so gewählt, daß es dem ursprünglich auf dem Phasenleiter 3a vorhandenen Tonfrequenzsignal entgegengerichtet ist, d.h. mit dem Stromwandler 9 wird im Phasenleiter 3a eine der Spannung der ursprünglichen Tonfrequenzsignale entgegengerichtete Spannung induziert. Der dargestellte Sperrkreis bildet also eine Regelschleife, mit der das Tonfrequenzsignal kompensiert wird, d.h. seine Amplitude nahezu auf Null gebracht wird. Der Stromwandler 9 ist primärseitig ebenfalls mit einer für die Tonfrequenz niederohmigen Bürde in Form eines auf die Tonfrequenz abgestimmten Parallelschwingkreises 11a, 11b abgeschlossen.

Mit der in Figur 2 dargestellten Schaltung kann ein Sperrkreis mit wesentlich geringerem Aufwand realisiert werden als mit herkömmlichen Schwinkreisen mit Drosseln und Kondensatoren.

2 Figuren
8 Patentansprüche

0115815

- 9 -     VPA **83 P 3 0 3 8 E**

<u>Patentansprüche</u>

1. Schaltungsanordnung zur Übertragung von Tonfrequenzsignalen über einen Netztransformator in Stern-Dreieck-Schaltung, der zwei n-phasige Stromnetze miteinander koppelt, von denen ein Stromnetz zwischen die Phasenleiter geschaltete Kompensationskondensatoren aufweist, wobei die Tonfrequenzsignale in diesem Stromnetz zwischen einem Phasenleiter und einem Nulleiter eingekoppelt sind,
d a d u r c h   g e k e n n z e i c h n e t ,
daß in dem mit Kompensationskondensatoren (4) versehenen Stromnetz (A - B) dem Netztransformator (6) in (n - 1) Phasen Sperrkreise (5) für die Tonfrequenz vorgeschaltet sind.

2. Schaltungsanordnung nach Anspruch 1,
d a d u r c h   g e k e n n z e i c h n e t ,
daß jeder Sperrkreis (5) einen Strommeßwandler (8) und einen Stromwandler (9) enthält, wobei die Primärwicklung des Strommeßwandlers (8) und die Sekundärwicklung des Stromwandlers (9) in Reihenschaltung in den zugeordneten Phasenleiter (3a, 3b) eingefügt sind und daß die Sekundärwicklung des Strommeßwandlers (8) über ein auf die Tonfrequenz abgestimmtes, für dieses durchlässiges Filter (12) und einen Leistungsverstärker (13) mit der Primärwicklung des Stromwandlers (9) verbunden ist.

3. Schaltungsanordnung nach Anspruch 2,
d a d u r c h   g e k e n n z e i c h n e t ,
daß der Sekundärwicklung des Strommeßwandlers (8) ein auf die  Tonfrequenz abgestimmter Parallelschwingkreis (10) parallel geschaltet ist.

0115815

4. Schaltungsanordnung nach Anspruch 2 oder 3, d a d u r c h   g e k e n n z e i c h n e t , daß der Primärwicklung des Stromwandlers (9) ein auf die Tonfrequenz abgestimmter Parallelschwingkreis (11) parallel geschaltet ist.

5. Schaltungsanordnung nach einem der Ansprüche 2 bis 4, d a d u r c h   g e k e n n z e i c h n e t , daß zwischen Leistungsverstärker (13) und Primärwicklung des Stromwandlers (9) ein Übertrager (14) angeordnet ist.

6. Schaltungsanordnung nach einem der Ansprüche 2 bis 5, d a d u r c h   g e k e n n z e i c h n e t , daß das Filter (12) ein aktives Filter ist.

7. Schaltungsanordnung nach einem der Ansprüche 2 bis 6, d a d u r c h   g e k e n n z e i c h n e t , daß der Strommeßwandler (8) und der Stromwandler (9) Durchsteckwandler sind.

8. Schaltungsanordnung nach einem der Ansprüche 1 bis 7, d a d u r c h   g e k e n n z e i c h n e t , daß in dem mit Sperrkreisen (5) versehenen Stromnetz (A, B) zwischen Verbrauchern und den Sperrkreisen (12) die einzelnen Phasen (3a bis 3c) mit Koppelkondensatoren (2) überbrückt sind.

83 P 3038
0115815

A                    B                    C

FIG 1

FIG 2

Europäisches Patentamt

**EUROPÄISCHER RECHERCHENBERICHT**

EP 84 10 0720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | SIEMENS-ZEITSCHRIFT, Band 48, Heft 2, 1974, Seiten 69-75, Erlangen, DE. E.-R. PAESSLER: "Technik der Tonfrequenz-Rundsteuerung in Energieversorgungsnetzen" * Seiten 70-71, Abschnitt "Steuerfrequenz"; Seiten 71-73, Abschnitt "Einspeisetechnik" * | 1 | H 04 B 3/56 |
| Y | GB-A-2 048 622 (THE ELECTRICITY COUNCIL) * Seite 2, Zeilen 98-112; Figur 2 * | 1 | |
| A | * Seite 1, Zeile 130 - Seite 2, Zeile 112; Figuren 1,2 * | 2,7 | |
| A | US-A-2 032 360 (GREEN) * Seite 1, Zeile 24 - Seite 2, Zeile 32; Figuren 1,2 * | 1,2 | RECHERCHIERTE SACHGEBIETE (Int. Cl. ³)<br><br>H 04 B |
| A | DE-A-2 253 861 (USINGER) * Seite 2, Zeilen 23-32; Seite 3, Zeile 12 - Seite 5, Zeile 3; Figuren 1-5 * | 2-6 | |
| A | US-A-4 065 763 (WHITE et al.) * Spalte 7, Zeile 63 - Spalte 8, Zeile 10; Figur 4 * | 8 | |

Der vorliegende Recherchenbericht wurde für alle Patentansprüche erstellt.

| Recherchenort | Abschlußdatum der Recherche | Prüfer |
|---|---|---|
| DEN HAAG | 13-04-1984 | GULDNER H.D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82